# EUROPÄISCHE PATENTSCHRIFT

(11) **EP 3 088 249 B1**
(45) Veröffentlichungstag und Bekanntmachung des Hinweises auf die Patenterteilung: **06.05.2020**
(21) Anmeldenummer: 16000535.1
(22) Anmeldetag: 05.03.2016
(51) Int. Cl.: B60Q 1/14, F21S 41/663

(54) **VERFAHREN ZUM BETREIBEN EINER SCHEINWERFEREINRICHTUNG SOWIE SCHEINWERFEREINRICHTUNG EINES KRAFTFAHRZEUGS**
METHOD FOR OPERATING A HEADLAMP DEVICE AND HEADLAMP DEVICE OF A MOTOR VEHICLE
PROCEDE DE FONCTIONNEMENT D'UN MODULE DE PHARE ET MODULE DE PHARE D'UN VEHICULE AUTOMOBILE

(30) Priorität: 29.04.2015 DE 102015005649
(43) Veröffentlichungstag der Anmeldung: 02.11.2016
(73) Patentinhaber: AUDI AG, 85045 Ingolstadt (DE)
(72) Erfinder: GUT, Carsten, DE - 85051 Ingolstadt (DE)
(74) Vertreter: Thielmann, Frank

(56) Entgegenhaltungen:
- EP-A1- 2 233 356
- EP-A1- 2 578 452
- EP-A1- 2 752 615
- DE-A1-102012 008 833

## Beschreibung

Die Erfindung betrifft eine Scheinwerfereinrichtung für ein Kraftfahrzeug mit mehreren unterschiedlichen Leuchtsegmenten zum Ausleuchten unterschiedlicher Bereiche einer Umgebung des Kraftfahrzeugs sowie ein Verfahren zum Betreiben einer solchen Scheinwerfereinrichtung.

Jedes Kraftfahrzeug ist heute mit einer Scheinwerfereinrichtung zum Beleuchten einer Umgebung des Kraftfahrzeugs ausgestattet. Dabei kann beispielsweise durch Zusatzscheinwerfer auch ein zusätzlicher Bereich beleuchtet werden, wie dies unter anderem durch Nebelscheinwerfer oder so genannte Kurvenlichter der Fall ist. Es gibt auch Scheinwerfereinrichtungen für Kraftfahrzeuge, welche es erlauben, durch ein Aktivieren unterschiedlicher Leuchtsegmente gezielt unterschiedliche Bereiche der Umgebung des Kraftfahrzeugs zu beleuchten. Dies erfolgt beispielsweise so durch die AUDI Matrix-LED-Scheinwerfer, in welchen mehrere Leuchtsegmente jeweils unterschiedliche Bereiche fest vorgegebener Größe beleuchten. Dies kann auch dynamisch erfolgen, sodass während des Fahrens bestimmte Leuchtsegmente an- und abgeschaltet werden.

Die EP 2578452 A1 offenbart eine Kontrolleinrichtung für eine Spotleuchte eines Fahrzeugs mit einer Objekterfassungseinheit zum Erfassen eines Objektes vor dem Fahrzeug und mit einer Lichtkontrolleinheit, um die Lichtabstrahlung einer Fahrzeugspotleuchte zu steuern. Dabei ist die Lichtkontrolleinheit ausgebildet, die Lichtabstrahlung der Spotleuchte derart zu steuern, dass diese ein Licht zu dem Objekt abstrahlt und dabei ein Beleuchtungsmuster des abgestrahlten Lichtes verändert. Dabei weist die Spotleuchte eine lichtimitierende Einheit mit mehreren lichtemittierenden Elementen mittels welchen jeweilige Regionen beleuchtet werden. Für das Verändern des Beleuchtungsmusters werden dabei die jeweiligen lichtemittierenden Elemente aktiviert und/oder deaktiviert und somit die zugeordneten Regionen jeweils ausgeleuchtet oder nicht.

Die EP 2752615 A1 offenbart einen Scheinwerfer für ein Automobil mit einer Lichtquelle, welche eine Vielzahl von LED-Chips aufweist. Dabei können unterschiedliche Teilmengen der LED-Chips aktiviert werden, um unterschiedliche Sektionen vor dem Kraftfahrzeug zu beleuchten.

Die DE 10 2012 008 833 A1 offenbar eine Beleuchtungsanordnung für einen Scheinwerfer mit einer Vielzahl von Leuchtdioden, welche gruppenweise in einer Anzahl von Leuchtdiodenfeldern zusammengefasst sind. Durch Aktivierung unterschiedlicher Leuchtdioden können dabei unterschiedliche Lichtverteilungen erzeugt werden.

Die EP 2233356 A1 offenbart eine Beleuchtungseinrichtung, bei welcher die Helligkeit in einem Beleuchtungsbereich auf einer Straßenoberfläche reduziert wird, wenn sich dadurch die durch einer Gefahreneinschätzungseinheit abgeschätzte Gefahr im Straßenverkehr reduzieren lässt.

Es ergibt sich die technische Aufgabe, auf intuitive und sichere Weise eine Information über eine Funktionsfähigkeit einer Scheinwerfereinrichtung für ein Kraftfahrzeug mit mehreren Leuchtsegmenten zum Ausleuchten jeweiliger unterschiedlicher Bereiche einer Umgebung des Kraftfahrzeugs bereitzustellen.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Die Erfindung betrifft ein Verfahren zum Betreiben einer Scheinwerfereinrichtung für ein Kraftfahrzeug, wobei die Scheinwerfereinrichtung mehrere Leuchtsegmente mit einer jeweils (insbesondere gleichen) einstellbaren Anzahl von Leuchtpunkten (insbesondere identischer Geometrie und Leuchtfarbe) zum Ausleuchten unterschiedlicher Bereiche einer Umgebung des Kraftfahrzeugs umfasst. Die Leuchtsegmente können dabei insbesondere voneinander verschieden sein, d.h. durch disjunkte Mengen von jeweiligen Leuchtpunkten gebildet sein.

Das Verfahren umfasst dabei die folgenden Schritte: Zunächst ein Bereitstellen eines Einstellparameters. Dieses Bereitstellen kann auch ein Erfassen des Einstellparameters oder ein Erfassen einer Messgröße, von welcher ein Einstellparameter ableitbar ist oder abgeleitet wird, durch die Scheinwerfereinrichtung bzw. eine geeignete Verarbeitungseinheit der Scheinwerfereinrichtung umfassen. Ein nächster Schritt ist ein Einstellen der Anzahl der zu den jeweiligen Leuchtsegmenten gehörigen und damit für ein Aktivieren und/oder Deaktivieren des Leuchtsegments gemeinsam (insbesondere synchron) geschalteten Leuchtpunkte in Abhängigkeit des Einstellparameters durch die Scheinwerfereinrichtung. Es können so einzelne Leuchtpunkte oder Leuchtpixel zu Leuchtsegmenten einer vorbestimmten Größe zusammengeschaltet werden. Je größer die Leuchtsegmente sind, d.h. je größer die Anzahl der zu den jeweiligen Leuchtsegmenten gehörigen Leuchtpunkte ist, desto größer sind auch die jeweiligen unterschiedlichen Bereiche in der Umgebung des Kraftfahrzeugs, welche durch die zugeordneten Leuchtsegmente ausleuchtbar sind. Es können also die Anzahl und damit auch die Größe der Leuchtsegmente durch jeweiliges Zuordnen der Leuchtpunkte, welche in der Scheinwerfereinrichtung in einer konstanten Gesamtzahl vorhanden sind, eingestellt werden. Insbesondere kann dabei ein Leuchtpunkt immer nur einem Leuchtsegment zugeordnet sein. Dies entspricht dann dem Bilden der Leuchtsegmente durch disjunkte Mengen von Leuchtpunkten.

Das hat den Vorteil, dass so die Größe der unterschiedlichen, durch die Leuchtsegmente ausleuchtbaren Bereiche der Umgebung flexibel einstellbar ist. Damit wird bei einer (insbesondere dynamische) Lichtfunktion (oder einem insbesondere dynamischen Leuchtmodus), die durch ein (insbesondere dynamisches) Aktivieren und/oder Deaktivieren jeweiliger Leuchtsegmente charakterisiert ist, die Scheinwerfereinrichtung in ihrer Auflösung veränderbar. Es kann somit zu vorgegebenen oder vorgebbaren Zeitpunkten gezielt eine gröbere oder feinere Auflösung der Lichtfunktion mit größeren oder kleineren ausgeleuchteten unterschiedlichen Bereichen der Umgebung eingestellt werden. Die ausgeleuchteten Bereiche können grundsätzlich auch als eingeblendete Bereiche bezeichnet werden. Nicht ausgeleuchtete Bereiche können komplementär dazu grundsätzlich auch als ausgeblendete Bereiche bezeichnet werden. Für das Einstellen der Auflösung muss die Lichtfunktion als solche nicht aktiviert oder deaktiviert werden. Es kann somit über ein Variieren der Auflösung der Scheinwerfereinrichtung einem Fahrer eine visuelle Rückmeldung über einen Zustand der Scheinwerfereinrichtung gegeben werden, beispielsweise über ein ordnungsgemäßes Funktionieren der Lichtfunktion, oder darüber, dass die Lichtfunktion oder der Leuchtmodus aktiviert ist. Somit ist für einen Fahrer der Zustand der Scheinwerfereinrichtung besonders leicht zu erkennen. Dabei muss der Fahrer seinen Blick nicht von dem Straßengeschehen abwenden. Das erhöht die Sicherheit im Straßenverkehr, da so ein Abwenden des Blicks des Fahrers vom Verkehrsgeschehen vermieden ist. Betrifft die Lichtfunktion ein automatisches Ausblenden, also Verdunkeln, bestimmter Bereiche in der Umgebung des Kraftfahrzeugs, so unterbleibt beispielsweise ein unbemerktes Blenden anderer Verkehrsteilnehmer. Auch dies trägt zu einer erhöhten Sicherheit im Straßenverkehr bei.

In einer vorteilhaften Ausführungsform ist vorgesehen, dass die Leuchtpunkte jedes Leuchtsegments jeweils eine zusammenhängende Leuchtfläche bilden. Es ist dann bei mehr als einem Leuchtpunkt pro Leuchtsegment für jeden Leuchtpunkt eines Leuchtsegments zumindest ein nächster Nachbar ebenfalls zu dem einen Leuchtsegment gehörig. Die Leuchtfläche kann dabei ohne Unterbrechungen, d.h. ohne nicht zu dem Leuchtsegment gehörige Leuchtpunkte innerhalb eines Außenumfangs des jeweiligen Leuchtsegments ausgeführt sein. Das hat den Vorteil, dass auch die zu den Leuchtsegmenten gehörigen Bereiche der Umgebung des Kraftfahrzeugs jeweils eine zusammenhängende Leuchtfläche bilden und somit ein Aktivieren bzw. Deaktivieren der zugeordneten Leuchtsegmente, welches ein Erhellen bzw. ein Verdunkeln des zugeordneten Bereichs der Umgebung als zusammenhängenden Bereich zur Folge hat. Damit ist auch eine Veränderung, insbesondere der Größe, der Bereich besonders leicht wahrnehmbar und somit eine besonders zuverlässige Rückmeldung oder Information über den Zustand der Scheinwerfereinrichtung, wie zum Beispiel ein Funktionieren einer entsprechenden Lichtfunktion, bereitgestellt.

Das Bereitstellen des Einstellparameters umfasst ein Bereitstellen einer Zeitdauer seit einem Aktivieren eines (insbesondere dynamischen) Leuchtmodus der Scheinwerfereinrichtung oder ein Bereitstellen einer Information über eine Fahrcharakteristik. Dabei wird die Anzahl der zu den jeweiligen Leuchtsegmenten gehörigen Leuchtpunkte und damit die Größe der jeweiligen Leuchtsegmente mit zunehmender Dauer verringert. Mit zunehmender Dauer werden also die von den jeweiligen Leuchtsegmenten ausleuchtbaren Bereiche der Umgebung verkleinert und somit die Auflösung der Scheinwerfereinrichtung erhöht. Dies hat den Vorteil, dass eine leichte Bemerkbarkeit der Aktivierung bzw. der Funktionalität des entsprechenden Leuchtmodus der Scheinwerfereinrichtung kombiniert wird mit einer optimierten Funktionalität mit maximaler Auflösung. Eine Bedienperson, beispielsweise der Fahrer, erhält nämlich am Anfang eines Aktivierens des Leuchtmodus über die gröbere Auflösung zunächst eine leicht zugängliche Information über das einwandfreie Funktionieren bzw. das aktiviert sein der gewählten Lichtfunktionalität. Nachdem er die Information erhalten hat, steht die Lichtfunktionalität über die feinere Auflösung mit bestmöglicher Funktionalität zur Verfügung. Insbesondere durch ein schrittweises Verringern der Anzahl der Leuchtpunkte in den jeweiligen Leuchtsegmenten tritt der entsprechende Vorgang dann in den Hintergrund und lenkt den Fahrer nicht ab.

In einer bevorzugten Ausführungsform ist vorgesehen, dass das Bereitstellen des Einstellparameters ein Bereitstellen einer Information über eine Geschwindigkeit des Kraftfahrzeugs umfasst. Dabei wird für eine größere Geschwindigkeit die Anzahl der Leuchtpunkte für die jeweiligen Leuchtsegmente kleiner eingestellt als für eine kleinere Geschwindigkeit. Dies hat den Vorteil, dass ein Fahrer bei höherer Geschwindigkeit nicht oder schwerer durch heller bzw. dunkler werdende Bereiche gröberer Auflösung, also besonders große heller bzw. dunkler werdende Bereiche, in der Umgebung des Kraftfahrzeugs abgelenkt wird.

In einer weiteren Ausführungsform ist vorgesehen, dass das Bereitstellen einer Information über eine Fahrcharakteristik eine Beschleunigung, und/oder eine Fahrdynamikeinstellung des Kraftfahrzeugs und/oder eine weitere Einstellung einer Fahrerassistenzeinrichtung des Kraftfahrzeugs umfasst. Dies hat den Vorteil, dass die Größe der individuell ausleuchtbaren Bereiche auf eine tatsächliche oder zu erwartende Fahrcharakteristik bzw. Fahrdynamik angepasst werden kann. Somit kann verhindert werden, dass der Fahrer durch übermäßig große, sich erhellende oder verdunkelnde Bereiche in der Umgebung abgelenkt wird und gleichzeitig innerhalb seines normalen Blickfelds eine Rückmeldung über das Funktionieren bzw. die Funktionalität der Scheinwerfereinrichtung erhält.

In einer besonders vorteilhaften Ausführungsform ist vorgesehen, dass das Bereitstellen des Einstellparameters ein Bereitstellen oder ein Erfassen einer Information über eine Helligkeit der Umgebung des Kraftfahrzeugs umfasst. Dabei wird für eine größere Helligkeit die Anzahl der Leuchtpunkte für die jeweiligen Leuchtsegmente größer eingestellt als für eine geringe Helligkeit. Somit kann auch bei einer größeren Helligkeit der Umgebung über eine Vergrößerung der heller bzw. dunkler werdenden Bereiche in der Umgebung das veränderte Ausleuchten der Umgebung leichter durch den Fahrer wahrgenommen werden. Bei einer geringeren Helligkeit der Umgebung kann eine gleiche oder vergleichbare Wahrnehmbarkeit dieser Veränderung bereits erreicht werden, wenn die Anzahl der Leuchtpunkte weniger groß eingestellt ist. Damit wird die Sicherheit nochmals erhöht, da die Wahrnehmbarkeit der augenblicklichen Auflösung der Scheinwerfereinrichtung an die vorherrschenden Bedingungen angepasst ist.

In einer anderen Ausführungsform kann vorgesehen sein, dass das Bereitstellen des Einstellparameters ein Erfassen einer bereitgestellten Information über eine Dauer einer bisherigen Fahrt des Kraftfahrzeugs umfasst, und für eine längere Dauer eine größere Anzahl der Leuchtpunkte für die jeweiligen Leuchtsegmente eingestellt wird als für eine geringere Dauer. Dies hat den Vorteil, dass gerade bei Beginn einer Fahrt, wenn also der Fahrer möglicherweise noch keine Rückmeldung über die Funktionstüchtigkeit der Scheinwerfereinrichtung erhalten hat, ihm diese auf komfortable und sichere Art signalisiert wird.

In einer anderen Ausführungsform kann des Weiteren vorgesehen sein, dass das Bereitstellen des Einstellparameters ein Bereitstellen einer Information über vorliegende Straßenverhältnisse umfasst, und insbesondere bei Befahren einer Autobahn die Anzahl der Leuchtpunkte für die jeweiligen Leuchtbereiche geringer eingestellt wird als bei Befahren sonstiger Straßen. Das hat den Vorteil, dass die vorliegenden Straßenverhältnisse für die Wahl der optimalen Anzahl der Leuchtpunkte für die jeweiligen Leuchtsegmente berücksichtigt werden können und gerade auf einer Autobahn, auf welcher mit besonders hohen Geschwindigkeiten zu rechnen ist, eine mögliche Ablenkung des Fahrers durch sich erhellende oder verdunkelnde Bereiche in der Umgebung minimiert ist.

In einer weiteren Ausführungsform ist vorgesehen, dass das Bereitstellen des Einstellparameters wiederholt erfolgt, insbesondere kontinuierlich oder quasi kontinuierlich. Dies hat den Vorteil, dass die Anzahl der Leuchtpunkte für die jeweiligen Leuchtsegmente und damit die Größe der Leuchtsegmente und der von den Leuchtsegmenten ausleuchtbaren Bereiche in der Umgebung des Kraftfahrzeugs dynamisch an sich verändernde Bedingungen anpassbar ist bzw. angepasst werden kann.

In einer weiteren Ausführungsform ist vorgesehen, dass auch ein Vorgeben einer Mindestanzahl von Leuchtpunkten pro Leuchtsegment erfolgt, welche in keinem Leuchtmodus der Scheinwerfereinrichtung unterschritten werden darf oder kann oder unterschritten wird. Diese Mindestanzahl kann dabei in der Scheinwerfereinrichtung bzw. in einer Steuereinheit der Scheinwerfereinrichtung hinterlegt sein. Dies hat den Vorteil, dass die Scheinwerfereinrichtung für eine jeweilige vorgesehene Verwendung oder einen vorgesehenen Einsatzbereich optimiert werden kann.

Die Erfindung betrifft auch eine Scheinwerfereinrichtung für ein Kraftfahrzeug, mit mehreren Leuchtsegmenten zum Ausleuchten unterschiedlicher Bereiche einer Umgebung des Kraftfahrzeugs. Dabei umfassen die Leuchtsegmente jeweils eine einstellbare Anzahl von Leuchtpunkten oder Leuchtpixeln. Die Anzahl der zu den jeweiligen Leuchtsegmenten gehörigen und damit gemeinsam schaltbaren Leuchtpunkte ist in Abhängigkeit zumindest eines Einstellparameters einstellbar. Vorteile und vorteilhafte Ausführungsformen entsprechen hier den Vorteilen und vorteilhaften Ausführungsformen des Verfahrens.

Die Scheinwerfereinrichtung kann auch einen Pixellichtscheinwerfer umfassen, mit welchem eine Umgebung pixelweise, also punktweise, ausgeleuchtet wird. Dabei ist in der Umgebung durch ein Wegschalten von gemeinsam schaltbaren, den Pixeln oder Punkten entsprechenden Leuchtpunkten ein so genannter Ausblendbereich erzeugbar, in dem die Umgebung nicht ausgeleuchtet ist. Die Größe dieses Ausblendbereichs kann dann durch die Anzahl der gemeinsam schaltbaren Pixel oder Leuchtpunkte steuerbar sein.

Es kann hier auch vorgesehen sein, dass die Scheinwerfereinrichtung eine Reihe und/oder ein Feld (ein so genanntes Array) von Leuchtdioden (LED) und/oder eine Anordnung digitaler Mikrospiegel (so genannter Digital Micromirror Devices, DMD) und/oder ein Laserabtastsystem umfasst. Dabei entsprechen die individuellen Leuchtdioden als Bildpunkte der Reihe oder des Felds den jeweiligen Leuchtpunkten. Für eine Anordnung digitaler Mikrospiegel entsprechen die einzelnen Mikrospiegel den Leuchtpunkten. In einem Laserabtastsystem entsprechen den Leuchtpunkten die jeweiligen, zu einzelnen vorgebbaren Zeitpunkten durch den Laser bestrahlbaren und in Folge Licht abstrahlenden Bereiche eines Konverterelements oder eine entsprechende Orientierung eines Spiegels, welcher einen Laserstrahl zu einzeln vorgebbaren Zeitpunkten in einem vorgegebenen Winkel eine Umgebung des Kraftfahrzeugs ablenkt. Dies hat den Vorteil, dass die Scheinwerfereinrichtung eine große Gesamtzahl an Leuchtpunkten aufweist, beispielsweise mehr als 100000 Leuchtpunkte im Falle eines digitalen Mikrospiegels, und somit einerseits sehr kleine, unabhängig voneinander ausleuchtbare Bereiche in der Umgebung des Kraftfahrzeugs erzielt werden können und andererseits durch ein Zusammenfassen vieler Leuchtpunkte zu entsprechenden Leuchtsegmenten auf einfache Weise auch größere unterschiedliche Bereiche in der Umgebung des Kraftfahrzeugs unabhängig voneinander ausleuchtbar sind.

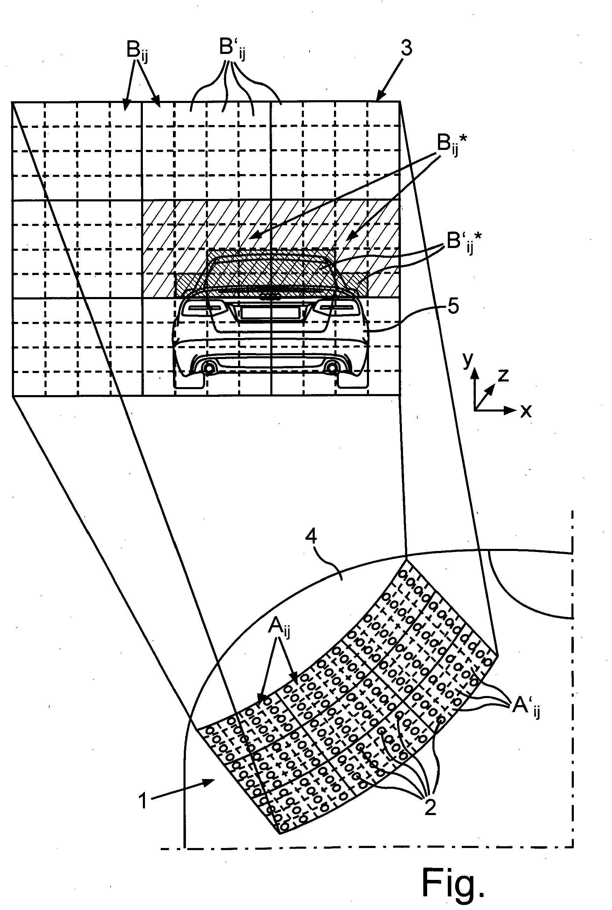

Alle vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder aber in Alleinstellung verwendbar, ohne den Rahmen der Erfindung gemäß den beiliegenden Ansprüchen zu verlassen. Es sind somit auch Ausführungen von der Erfindung als umfasst und offenbart anzusehen, die in der Figur nicht explizit gezeigt und erläutert sind, jedoch durch separierte Merkmalskombination aus den erläuterten Ausführungen hervorgehen und erzeugbar sind.

Ein Ausführungsbeispiel der Erfindung wird nachfolgend anhand einer schematischen Zeichnung näher erläutert. Dabei zeigt die einzige Figur eine schematische Darstellung einer beispielhaften Ausführungsform einer Scheinwerfereinrichtung.

Die Scheinwerfereinrichtung 1 ist hier zu einem Kraftfahrzeug 4 gehörig und weist vorliegend eine Vielzahl von Leuchtpunkten 2 auf, mit welcher eine Umgebung 3, die im gezeigten Beispiel durch ein Rechteck symbolisiert ist, ausleuchtbar ist. Die Scheinwerfereinrichtung 1 weist dabei Leuchtsegmente Aᵢⱼ, A'ᵢⱼ auf, in welchen vorliegend zu einem Zeitpunkt jeweils eine identische Anzahl von Leuchtpunkten angeordnet ist. Die größeren Leuchtsegmente Aᵢⱼ für eine gröbere Auflösung weisen dabei mehrere, vorliegend je 16, Leuchtpunkte 2 auf. Die kleineren Leuchtsegmente A'ᵢⱼ für eine feinere Auflösung weisen hier je einen Leuchtpunkt 2 auf. Den Leuchtsegmenten Aᵢⱼ, A'ᵢⱼ sind entsprechende unterschiedliche Bereiche Bᵢⱼ, B'ᵢⱼ in der Umgebung 3 zugeordnet. Sind entsprechend die gemeinsam schaltbaren Leuchtpunkte 2 in einem jeweiligen Leuchtsegment Aᵢⱼ, A'ᵢⱼ aktiviert bzw. deaktiviert, so ist der zugehörige Bereich Bⱼⱼ, B'ᵢⱼ in der Umgebung 3 des Kraftfahrzeugs 4 durch die Scheinwerfereinrichtung 1 ausgeleuchtet bzw. nicht ausgeleuchtet.

Die jeweiligen Leuchtsegmente Aᵢⱼ, A'ᵢⱼ und folglich die jeweiligen Bereiche Bᵢⱼ, B'ᵢⱼ sind dabei in ihrer Größe einstellbar, da jeweils die Anzahl von Leuchtpunkten 2 einstellbar ist, welche zu einem der Leuchtsegmente Aᵢⱼ, A'ᵢⱼ gehören und entsprechend gemeinsam geschaltet werden. In der Figur sind entsprechend eine erste Einstellung mit ersten Leuchtsegmenten Aᵢⱼ und ersten, größeren Bereichen Bᵢⱼ dargestellt sowie eine zweite Einstellung mit zweiten Leuchtsegmenten A'ᵢⱼ und entsprechend kleineren zweiten Bereichen B'ᵢⱼ. Im gezeigten Beispiel entsprechen einem ersten Leuchtsegment Aᵢⱼ bzw. Bereich Bᵢⱼ 16 zweite Leuchtsegmente A'ᵢⱼ bzw. 16 zweite Bereiche B'ᵢⱼ.

Ist nun beispielsweise durch eine Fahrerassistenzeinrichtung des Kraftfahrzeugs 4 an die Scheinwerfereinrichtung 1 eine Information über ein vorausfahrendes Kraftfahrzeugs 5 bereitgestellt, dessen Fahrer durch die Scheinwerfereinrichtung 1 geblendet werden könnte, so kann im gezeigten Beispiel ein Ausblenden der entsprechenden ersten Bereiche Bᵢⱼ, B'ᵢⱼ durch die Scheinwerfereinrichtung 1 erfolgen. Im gezeigten Beispiel kann dies zum Beispiel kurz nach einem Aktivieren eines entsprechenden Leuchtmodus der Scheinwerfereinrichtung 1 erfolgen, indem die Bereiche Bᵢⱼ, B'ᵢⱼ, in welchen sich zum Vermeiden einer Blendung des vorausfahrenden Fahrzeugs 5 nicht durch die Scheinwerfereinrichtung 1 zu bestrahlende Teile des Kraftfahrzeugs 5 wie beispielsweise Rückspiegel oder Heckscheibe befinden, ausgeblendet werden. Das sind vorliegend zwei Bereiche B*ᵢⱼ, deren zwei zugehörige Leuchtsegmente Aᵢⱼ entsprechend deaktiviert sind (aus Gründen der Übersichtlichkeit sind die entsprechenden Leuchtsegmente Aᵢⱼ in der Figur nicht kenntlich gemacht).

Da die ersten Leuchtsegmente Aᵢⱼ bzw. die ersten Bereiche Bᵢⱼ der Umgebung 3 verhältnismäßig groß sind, wird ein großer Teil der Umgebung 3 nicht mehr ausgeleuchtet, im gezeigten Beispiel 2/9 (22%) der insgesamt ausgeleuchteten Umgebung 3. Diese Abdunklung der entsprechenden Bereiche ist durch einen Fahrer des Kraftfahrzeugs 4 sehr leicht wahrzunehmen, welcher somit - ohne seinen Blick von der Fahrbahn zu wenden - eine Rückmeldung darüber erhält, dass der Leuchtmodus, hier die dynamische Lichtfunktion in Form einer Blendvermeidung, einwandfrei funktioniert.

Um die Lichtfunktion, in diesem Beispiel die Blendvermeidung, mit der bestmöglichen Ausleuchtung der Umgebung 3 zu verbinden, können mit einem Fortschreiten der Zeit seit dem Aktivieren des entsprechenden Leuchtmodus der Scheinwerfereinrichtung 1 die ersten Leuchtsegmente Aᵢⱼ in die zweiten Leuchtsegmente A'ᵢⱼ überführt werden, indem die Anzahl zu den jeweiligen Leuchtsegmenten Aᵢⱼ gehörigen Leuchtpunkte 2 verringert wird. Als Konsequenz kann die Umgebung 3 feiner aufgelöst ausgeleuchtet bzw. nicht ausgeleuchtet oder abgedunkelt werden. Vorliegend würde beispielsweise ein Deaktivieren von den Leuchtpunkten 2 in 10 zweiten Leuchtsegmenten A'*ᵢⱼ genügen, was einem Anteil von 10/144 (7%) der Umgebung 3 entspricht. Damit ist die Ausleuchtung der Umgebung 3 dank der geringeren Anzahl an Leuchtpunkten 2 pro Leuchtsegment Aᵢⱼ, also der feineren Auflösung, verbessert und gleichzeitig weiterhin der Blendschutz für den Fahrer des vorausfahrenden Kraftfahrzeugs 5 sichergestellt.

Da der entsprechende Teil der Umgebung, hier die 7%, jedoch sehr klein ist, hätte jedoch ohne den vorherigen Betrieb mit einer gröberen Auflösung der Fahrer des Kraftfahrzeugs 4 das ordnungsgemäße Funktionieren des Leuchtmodus' oder dessen Aktivierung möglicherweise nicht, oder nicht ohne seinen Blick von der Fahrbahn ab- und Instrumenten zuzuwenden, wahrgenommen. Er wäre somit gegebenenfalls im Unsicheren darüber geblieben, ob er nun einen vorausfahrenden Verkehr blendet oder nicht.

## Patentansprüche

1. Verfahren zum Betreiben einer Scheinwerfereinrichtung (1) für ein Kraftfahrzeug (4), wobei die Scheinwerfereinrichtung (1) mehrere Leuchtsegmente (Aᵢⱼ, A'ᵢⱼ) zum Ausleuchten unterschiedlicher Bereiche (Bᵢⱼ, B'ᵢⱼ) einer Umgebung (3) des Kraftfahrzeugs (4) umfasst, wobei die jeweiligen Leuchtsegmente (Aᵢⱼ, A' ᵢⱼ) eine jeweils einstellbare Anzahl von Leuchtpunkten (2) umfasst,
mit den Schritten:
- Bereitstellen eines Einstellparameters;
- Einstellen der Anzahl der zu den jeweiligen Leuchtsegmenten (A) gehörigen und damit der für ein Aktivieren oder Deaktivieren des Leuchtsegments (Aᵢⱼ, A'ᵢⱼ) gemeinsam geschalteten Leuchtpunkte (2) in Abhängigkeit des Einstellparameters durch die Scheinwerfereinrichtung (1),
wobei je größer die Anzahl der zu den jeweiligen Leuchtsegmenten (Aⱼⱼ, A'ⱼⱼ) gehörigen Leuchtpunkte (2) ist, desto größer auch die jeweiligen unterschiedlichen Bereiche in der Umgebung (3) des Kraftfahrzeugs (4) sind, welche durch die zugeordneten Leuchtsegmente (Aⱼⱼ, A'ⱼⱼ) ausleuchtbar sind und somit die Auflösung der Scheinwerfereinrichtung (1) durch das Einstellen der Anzahl der gemeinsam geschalteten Leuchtpunkte (2) veränderbar ist, sodass ein Leuchtmodus für ein Einstellen der Auflösung als solcher nicht aktiviert oder deaktiviert werden muss,
und
wobei entweder das Bereitstellen des Einstellparameters ein Bereitstellen einer Zeitdauer seit einem Aktivieren eines Leuchtmodus der Scheinwerfereinrichtung (1) umfasst, und die Anzahl der zu den jeweiligen Leuchtsegmenten (Aⱼⱼ, A'ⱼⱼ) gehörigen Leuchtpunkte (2) und damit die Größe der jeweiligen Leuchtsegmente (Aⱼⱼ, A'ⱼⱼ) mit zunehmender Zeitdauer verringert wird,
oder das Bereitstellen des Einstellparameters ein Bereitstellen einer Information über eine Fahrcharakteristik des Kraftfahrzeugs umfasst.

2. Verfahren nach Anspruch 1,
**dadurch gekennzeichnet, dass**
die Leuchtpunkte (2) jedes Leuchtsegments (Aⱼⱼ, A'ⱼⱼ) jeweils eine zusammenhängende Leuchtfläche bilden.

3. Verfahren nach einem der vorhergehenden Ansprüche,
**dadurch gekennzeichnet, dass**
das Bereitstellen des Einstellparameters ein Bereitstellen einer Information über eine Geschwindigkeit des Kraftfahrzeugs (4) umfasst, und für eine größere Geschwindigkeit die Anzahl der Leuchtpunkte (2) kleiner eingestellt wird als für eine kleinere Geschwindigkeit.

4. Verfahren nach einem der vorhergehenden Ansprüche,
**dadurch gekennzeichnet, dass**
das Bereitstellen einer Information über eine Fahrcharakteristik des Kraftfahrzeugs eine Beschleunigung, und/oder eine Fahrdynamikeinstellung des Kraftfahrzeugs (4) und/oder eine weitere Einstellung einer Fahrerassistenzeinrichtung umfasst.

5. Verfahren nach einem der vorhergehenden Ansprüche,
**dadurch gekennzeichnet, dass**
das Bereitstellen des Einstellparameters ein Bereitstellen einer Information über eine Helligkeit einer Umgebung (3) des Kraftfahrzeugs (4) umfasst, und für eine größere Helligkeit die Anzahl der Leuchtpunkte (2) größer eingestellt wird als für eine geringere Helligkeit.

6. Verfahren nach einem der vorhergehenden Ansprüche,
**dadurch gekennzeichnet, dass**
das Bereitstellen des Einstellparameters ein Bereitstellen einer Information über eine Dauer einer bisherigen Fahrt des Kraftfahrzeugs (4) umfasst, und für eine längere Dauer die Anzahl der Leuchtpunkte (2) geringer eingestellt wird als für eine geringere Dauer.

7. Verfahren nach einem der vorhergehenden Ansprüche,
**dadurch gekennzeichnet, dass**
das Bereitstellen des Einstellparameters ein Bereitstellen einer Information über vorliegende Straßenverhältnisse umfasst, und insbesondere bei Befahren einer Autobahn die Anzahl der Leuchtpunkte (2) geringer eingestellt wird als bei Befahren sonstiger Straßen.

8. Scheinwerfereinrichtung (1) für ein Kraftfahrzeug (4), mit mehreren unterschiedlichen Leuchtsegmenten (Aᵢⱼ, A'ᵢⱼ) zum Ausleuchten unterschiedlicher Bereiche (Bᵢⱼ, B'ⱼⱼ) einer Umgebung (3) des Kraftfahrzeugs (4), **dadurch gekennzeichnet, dass** die Leuchtsegmente (Aᵢⱼ, A'ᵢⱼ) jeweils eine einstellbare Anzahl von Leuchtpunkten (2) umfassen und die Anzahl der zu den jeweiligen Leuchtsegmenten (Aᵢⱼ, A'ᵢⱼ) gehörigen und damit gemeinsam schaltbaren Leuchtpunkte (2) in Abhängigkeit zumindest eines Einstellparameters einstellbar ist, wobei je größer die Anzahl der zu den jeweiligen Leuchtsegmenten (Aᵢⱼ, A'ᵢⱼ) gehörigen Leuchtpunkte (2) ist, desto größer auch die jeweiligen unterschiedlichen Bereiche in der Umgebung (3) des Kraftfahrzeugs (4) sind, welche durch die zugeordneten Leuchtsegmente (Aᵢⱼ, A'ⱼⱼ) ausleuchtbar sind und somit die Auflösung der Scheinwerfereinrichtung (1) durch das Einstellen der Anzahl der gemeinsam geschalteten Leuchtpunkte (2) veränderbar ist, sodass ein Leuchtmodus für ein Einstellen der Auflösung als solcher nicht aktiviert oder deaktiviert werden muss;
und dass entweder der Einstellparameter eine Zeitdauer seit einem Aktivieren eines Leuchtmodus der Scheinwerfereinrichtung (1) umfasst, und vorgeschrieben ist, die Anzahl der zu den jeweiligen Leuchtsegmenten (Aᵢⱼ, A'ᵢⱼ) gehörigen Leuchtpunkte (2) und damit die Größe der jeweiligen Leuchtsegmente (Aᵢⱼ, A'ⱼⱼ) mit zunehmender Zeitdauer zu verringern, oder der Einstellparameter eine Information über eine Fahrcharakteristik des Kraftfahrzeugs umfasst.

9. Scheinwerfereinrichtung (1) nach Anspruch 8,
**dadurch gekennzeichnet, dass**
die Scheinwerfereinrichtung (1) eine Reihe und/oder ein Feld von Leuchtdioden und/oder eine Anordnung digitaler Mikrospiegel und/oder ein Laserabtastsystem umfasst.

## Claims

1. Method for operating a headlamp device (1) for a motor vehicle (4), wherein the headlamp device (1) includes several light segments (Aᵢⱼ, A'ᵢⱼ) for illuminating different regions (Bᵢⱼ, B'ᵢⱼ) of an environment (3) of the motor vehicle (4), wherein the respective light segments (Aᵢⱼ, A'ᵢⱼ) includes a respectively adjustable number of light spots (2),
having the steps:
- provision of an adjustment parameter;
- adjusting the number of the light spots (2), belonging to the respective light segments (A) and thereby connected together for an activating or deactivating of the light segment (Aᵢⱼ, A'ᵢⱼ), depending on the adjustment parameter on the part of the headlamp device (1), wherein the greater the number of the light spots (2) belonging to the respective light segments (Aᵢⱼ, A'ᵢⱼ), the greater are also the respective different regions in the environment (3) of the motor vehicle (4) which can be illuminated by the assigned light segments (Aᵢⱼ, A'ᵢⱼ) and thereby the intensity of the headlamp device (1) can be altered by the adjusting of the number of the light spots (2) connected together, such that a light mode does not need to be activated or deactivated for an adjusting of the intensity as such,
and
wherein either the provision of the adjustment parameter includes a provision of a time duration since an activating of a light mode of the headlamp device (1) and the number of the light spots (2) belonging to the respective light segments (Aᵢⱼ, A'ᵢⱼ) and therewith the size of the respective light segments (Aᵢⱼ, A'ᵢⱼ) is reduced with increasing time duration,
or the provision of the adjustment parameter includes a provision of an information regarding a drive characteristic of the motor vehicle.

2. Method according to claim 1,
**characterised in that**
the light spots (2) of each light segment (Aᵢⱼ, A'ᵢⱼ) form in each case a continuous lighting surface.

3. Method according to any of the preceding claims,
**characterised in that**
the provision of the adjustment parameter includes a provision of an information regarding a speed of the motor vehicle (4) and for a greater speed the number of the light spots (2) is set as smaller than for a lower speed.

4. Method according to any of the preceding claims,
**characterised in that**
the provision of an information regarding a drive characteristic of the motor vehicle includes an acceleration and/or a vehicle dynamics setting of the motor vehicle (4) and/or a further setting of a driver assistance device.

5. Method according to any of the preceding claims,
**characterised in that**
the provision of an adjustment parameter includes a provision of an information regarding a brightness of an environment (3) of the motor vehicle (4), and for a greater brightness the number of the light spots (2) is set as greater than for a lower brightness.

6. Method according to any of the preceding claims,
**characterised in that**
the provision of an adjustment parameter includes a provision of an information regarding a duration of a previous journey of the motor vehicle (4), and for a longer duration the number of the light spots (2) is set as less than for a shorter duration.

7. Method according to any of the preceding claims,
**characterised in that**
the provision of an adjustment parameter includes a provision of an information regarding road conditions, and in particular when driving on a motorway the number of the light spots (2) is set as less than for driving on other roads.

8. Headlamp device (1) for a motor vehicle (4) having several different light segments (Aᵢⱼ, A'ᵢⱼ) for illuminating different regions (Bᵢⱼ, B'ᵢⱼ) of an environment (3) of the motor vehicle (4),
**characterised in that**
the light segments (Aᵢⱼ, A'ᵢⱼ) include in each case an adjustable number of light spots (2) and the number of the light spots belonging to the respective light segments (Aᵢⱼ, A'ᵢⱼ) and therewith connected together can be adjusted depending on at least one adjustment parameter, wherein
the greater the number is of the light spots (2) belonging to the respective light segments (Aᵢⱼ, A'ᵢⱼ), the greater also the respective different regions are in the environment (3) of the motor vehicle (4), which can be illuminated by the assigned light segments (Aᵢⱼ, A'ᵢⱼ) and therewith the intensity of the headlamp device (1) can be altered by the adjusting of the number of the light spots (2) connected together, such that a light modus does not need to be activated or deactivated for an adjustment of the intensity as such;
and that
either the adjustment parameter includes a time duration since an activation of a light modus of the headlamp device (1), and it is specified to reduce the number of the light spots (2) belonging to the respective light segments (Aᵢⱼ, A'ᵢⱼ) and therewith the size of the respective light segments (Aᵢⱼ, A'ᵢⱼ) with increasing time duration,
or the adjustment parameter includes an information regarding a drive characteristic of the motor vehicle.

9. Headlamp device (1) according to claim 8,
**characterised in that**
the headlamp device (1) includes a row and/or a field of LEDs and/or arrangement of digital micro-mirrors and/or a laser scanning system.

## Revendications

1. Procédé de fonctionnement d'un dispositif formant phare (1) destiné à un véhicule à moteur (4), dans lequel le dispositif formant phare (1) comprend plusieurs segments lumineux (Aᵢⱼ, A'ᵢⱼ) destinés à éclairer différentes régions (Bᵢⱼ, B'ᵢⱼ) d'un environnement (3) du véhicule à moteur (4), dans lequel les segments lumineux (Aᵢⱼ, A'ᵢⱼ) respectifs comprend un nombre respectivement ajustable de points lumineux (2), comprenant les étapes consistant à :
- fournir un paramètre d'ajustement ;
- ajuster le nombre de points lumineux (2) appartenant aux segments lumineux (A) respectifs et ainsi le nombre de points lumineux (2) commutés en commun pour une activation ou une désactivation du segment lumineux (Aᵢⱼ, A'ᵢⱼ) en fonction du paramètre d'ajustement grâce au dispositif formant phare (1),
dans lequel plus le nombre de points lumineux (2) appartenant aux segments lumineux (Aᵢⱼ, A'ᵢⱼ) respectifs est grand, plus les différentes régions respectives de l'environnement (3) du véhicule à moteur (4) qui peuvent être éclairées grâce aux segments lumineux (Aᵢⱼ, A'ᵢⱼ) associés sont grandes, et la résolution du dispositif formant phare (1) peut ainsi être modifiée grâce à l'ajustement du nombre de points lumineux (2) commutés en commun, de sorte qu'il n'est pas nécessaire d'activer ou de désactiver un mode d'éclairage pour un ajustement de la résolution en tant que telle,
et
dans lequel la fourniture du paramètre d'ajustement comprend la fourniture d'une durée depuis une activation d'un mode d'éclairage du dispositif formant phare (1), et le nombre des points lumineux (2) appartenant aux segments lumineux (Aᵢⱼ, A'ᵢⱼ) respectifs et donc la taille des segments lumineux (Aᵢⱼ, A'ᵢⱼ) respectifs diminue avec l'augmentation de la durée,
ou la fourniture du paramètre d'ajustement comprend la fourniture d'informations sur une caractéristique de conduite du véhicule à moteur.

2. Procédé selon la revendication 1,
**caractérisé en ce que**
les points lumineux (2) de chaque segment lumineux (Aᵢⱼ, A'ᵢⱼ) forment respectivement une surface lumineuse cohérente.

3. Procédé selon l'une quelconque des revendications précédentes,
**caractérisé en ce que**
la fourniture du paramètre d'ajustement comprend la fourniture d'informations sur une vitesse du véhicule à moteur (4) et pour une vitesse supérieure, le nombre de points lumineux (2) est ajusté de manière à être plus petit que pour une vitesse inférieure.

4. Procédé selon l'une quelconque des revendications précédentes,
**caractérisé en ce que**
la fourniture d'informations sur une caractéristique de conduite du véhicule à moteur comprend une accélération et/ou un ajustement de la dynamique de conduite du véhicule à moteur (4) et/ou un autre ajustement d'un dispositif d'aide à la conduite.

5. Procédé selon l'une quelconque des revendications précédentes,
**caractérisé en ce que**
la fourniture du paramètre d'ajustement comprend la fourniture d'informations sur une luminosité d'un environnement (3) du véhicule à moteur (4), et pour une luminosité supérieure, le nombre de points lumineux (2) est ajusté de manière à être plus grand que pour une luminosité inférieure.

6. Procédé selon l'une quelconque des revendications précédentes,
**caractérisé en ce que**
la fourniture du paramètre d'ajustement comprend la fourniture d'informations sur une durée d'une conduite précédente du véhicule à moteur (4), et pour une durée supérieure, le nombre de points lumineux (2) est ajusté de manière à être plus petit que pour une durée inférieure.

7. Procédé selon l'une quelconque des revendications précédentes,
**caractérisé en ce que**
la fourniture du paramètre d'ajustement comprend la fourniture d'informations sur des conditions routières existantes, et en particulier pour une conduite sur autoroute, le nombre de points lumineux (2) est ajusté de manière à être plus petit que pour une conduite sur d'autres routes.

8. Dispositif formant phare (1) pour un véhicule automobile (4), avec plusieurs segments lumineux (Aᵢⱼ, A'ᵢⱼ) différents destinés à éclairer différentes régions (Bᵢⱼ, B'ᵢⱼ) d'un environnement (3) du véhicule automobile (4),
**caractérisé en ce que**
les segments lumineux (Aᵢⱼ, A'ᵢⱼ) comprennent respectivement un nombre ajustable de points lumineux (2) et le nombre des points lumineux (2) appartenant aux segments lumineux (Aᵢⱼ, A'ᵢⱼ) respectifs et donc conjointement commutables peut être ajusté en fonction d'au moins un paramètre d'ajustement, dans lequel plus le nombre de points lumineux (2) appartenant aux segments lumineux (Aᵢⱼ, A'ᵢⱼ) respectifs est grand, plus les différentes régions respectives de l'environnement (3) du véhicule à moteur (4) qui peuvent être éclairées grâce aux segments lumineux (Aᵢⱼ, A'ᵢⱼ) associés sont grandes et la résolution du dispositif formant phare (1) peut ainsi être modifiée grâce à l'ajustement du nombre de points lumineux (2) commutés en commun, de sorte qu'il n'est pas nécessaire d'activer ou de désactiver un mode d'éclairage pour un ajustement de la résolution en tant que telle ;
et **en ce que**
soit le paramètre d'ajustement comprend une durée depuis l'activation d'un mode d'éclairage du dispositif formant phare (1), et, avec l'augmentation de la durée, il est recommandé de diminuer le nombre des points lumineux (2) appartenant aux segments lumineux (Aᵢⱼ, A'ᵢⱼ) respectifs et ainsi la taille des segments lumineux (Aᵢⱼ, A'ᵢⱼ) respectifs,
soit le paramètre d'ajustement comprend des informations sur une caractéristique de conduite du véhicule automobile.

9. Dispositif formant phare (1) selon la revendication 8,
**caractérisé en ce que**
le dispositif formant phare (1) comprend une rangée et/ou un champ de diodes électroluminescentes et/ou un agencement de micro-miroirs numériques et/ou un système de balayage laser.
